# EUROPÄISCHE PATENTANMELDUNG

(11) **EP 1 742 187 A2**
(43) Veröffentlichungstag der Anmeldung: **10.01.2007**
(21) Anmeldenummer: 06114667.6
(22) Anmeldetag: 30.05.2006
(51) Int. Cl.: G08C 19/00

(54) **Steuergerät**

(30) Priorität: 05.07.2005 DE 102005031344
(71) Anmelder: ROBERT BOSCH GMBH, 70442 Stuttgart (DE)
(72) Erfinder: Schuetze, Norman, 71726 Benningen A. N. (DE)

(57) **Zusammenfassung**

Es wird ein Steuergerät (SG) mit einem Schnittstellenbaustein (IF) vorgeschlagen, an dem wenigstens ein außerhalb des Steuergeräts (SG) im Fahrzeug angeordneter Sensor (S1, S2) anschließbar ist, wobei der Schnittstellenbaustein (IF) ein Signal, von dem wenigstens ein Sensor (S1, S2) in einem ersten Takt empfängt und ein Datentelegramm in einem zweiten Takt an einen Prozessor (µC) im Steuergerät (SG) überträgt, wobei der Schnittstellenbaustein (IF) eine Recheneinheit (R) zur Interpolation des Signals aufweist und der Schnittstellenbaustein (IF) im Datentelegramm das interpolierte Signal überträgt.

## Beschreibung

### Stand der Technik

Die Erfindung geht aus von einem Steuergerät nach der Gattung des unabhängigen Patentanspruchs.

Aus DE 101 112 65 A1 ist es bereits bekannt, dass ein Steuergerät einen Interface-Baustein aufweist, an den unterschiedliche außerhalb des Steuergeräts befindliche Sensoren im Fahrzeug angeschlossen sind. Die Sensoren übertragen asynchron ihre Sensordaten zum Interface-Baustein, während die Sensordaten vom Interface-Baustein synchron über eine SPI-Schnittstelle übertragen werden. Der Interface-Baustein oder Schnittstellenbaustein weist einen Zwischenspeicher auf, um Sensordaten zwischenzuspeichern.

### Vorteile der Erfindung

Das erfmdungsgemäße Steuergerät mit den Merkmalen des unabhängigen Patentanspruchs hat demgegenüber den Vorteil, dass durch die Interpolation der Sensorsignale durch eine Recheneinheit im Interface-Baustein trotz unterschiedlicher Takte der Übertragung vom Sensor zum Interface-Baustein und vom Interface-Baustein zum Prozessor immer aktualisierte Sensorwerte dem Prozessor übertragen werden. Diese interpolierten Werte werden dann beispielsweise mit einer Aktualisierungszeit von einer Microsekunde durch die Recheneinheit des Schnittstellenbausteins zur Verfügung gestellt. In jeder Mikrosekunde wird dem Prozessor ein neues interpoliertes Beschleunigungsdatum zur Verfügung gestellt, das ist die Bereitstellung am SPI-Ausgangsregister des Schnittstellenbausteins. Bei einem beispielhaften Schnittstellenbaustein sind dies insgesamt 228. Die Daten werden jeweils nach 1µs mit dem neuerem Datum überschrieben, egal ob der Prozessor die Daten aus dem Register abgeholt hat oder nicht.

Durch die in den abhängigen Ansprüchen aufgeführten Maßnahmen und Weiterbildungen sind vorteilhafte Verbesserungen des im unabhängigen Patentanspruch angegebenen Steuergeräts möglich.

Besonders vorteilhaft ist, dass die Interpolation linear durchgeführt wird. Dies ermöglicht eine einfache Berechnung der interpolierten Werte mit minimaler Rechenzeit und geringer Komplexität der Recheneinheit. Alternativ ist es jedoch möglich, auch andere nicht lineare Interpolationen zu verwenden.

Weiterhin ist es vorteilhaft, dass die Recheneinheit die lineare Interpolation in Abhängigkeit von dem Signal in zwei aufeinander folgenden Zeitabschnitten im ersten Takt und einem weiteren Wert durchführt. Dies kann dann beispielsweise derart geschehen, dass aus dem Signal des Sensors aus zwei aufeinander folgenden Zeitabschnitten eine Differenz gebildet wird, um daraus einen Dividenden zu erzielen. Der weitere Wert ist dann der Divisor. Der Quotient ergibt dann eine Werteänderung für den nächsten Wert, um eine Interpolation herzustellen. Da es sich um eine lineare Interpolation handelt, entspricht dieser Quotient einer geraden Steigung, die entweder negativ oder positiv sein kann. Damit kann dann für jede Mikrosekunde ein interpolierter Wert zwischen zwei übertragenen Werten angegeben werden. Dieser weitere Wert kann entweder fest voreingestellt werden, das den Vorteil hat, dass anstatt einer herkömmlichen Division mehrere Schiebeoperationen mit anschließender Addition stattfinden. Schiebeoperationen haben innerhalb der Digitaltechnik den Vorteil, dass sie sehr einfach innerhalb eines ASIC-Logikteils implementiert werden können. Eine Division durch 228 lässt sich nur durch eine Division mit Restwertbildung durchführen. Man kann eine Näherung nutzen. Dabei bedient man sich des bitweisen Schiebens im Register nach rechts. Dabei bedeutet einmal Schieben nach rechts eine Teilung durch 2, d.h. das oberste Bit rückt eine Stelle nach rechts im Register und der freie Platz wird mit einer 0 aufgefüllt. Das unterste Bit fällt dann weg. Zweimal Schieben ist demnach eine Teilung durch 4, dreimal Schieben eine Teilung durch 8. Schiebt man insgesamt den Registerinhalt, bspw. 10 Bit 8mal nach rechts, so entspricht dies einer Teilung durch 256.

Allerdings werden im Interface die unteren rausgeschobenen Bits nicht gelöscht, sondern einfach weitergeschoben. Dafür ist dann das Register nicht nur 10 Bit groß, sondern vergrößert, beispielweise 18 Bit. Dieser zusätzliche Bitbereich repräsentiert den Nachkommabereich, also eine Zahl von kleiner 1. Da eine Teilung durch 256 einen zu kleinen Wert ergibt, wird dieser Fehler durch eine Korrektur ausgeglichen. Die Formel lautet (V2-V1)/256+((V2-V1)/256)/8. Das ergibt einen Divisor von ca. 227,55. Für das bitweise Schieben ist nur ein entsprechend großes Schieberegister nötig. Dieses gehört zu den digitalen Grundelementen, so dass eine einfache Implementierbarkeit vorliegt.

Weiterhin ist es vorteilhaft, dass der Schnittstellenbaustein einen Zähler aufweist, in der eine Zeitdifferenz zwischen den aufeinander folgenden Zeitabschnitten bestimmt wird und dass dann diese Zeitdifferenz als der Wert verwendet wird in Abhängigkeit dessen, die lineare Interpolation durchgeführt wird. Damit wird der Fall berücksichtigt, dass die Periode, in der die Datenpakete vom Sensor an den Interface-Baustein übertragen werden, nicht immer gleich ist, sondern gewissen Schwankungen unterliegt, die vom Oszillator in den einzelnen Sensoren abhängen. Damit wird dann eine genauere Interpolation möglich und mögliche Unstetigkeiten werden vermieden. Der Zähler startet dabei mit dem erfolgreichen Empfang eines ersten Datenpakets im ersten Zeitabschnitt. Sobald das zweite Datenpaket empfangen wurde, wird der Zähler gestoppt. D. h. mit dem letzten Bit der entsprechenden Datenpakete wird der Zähler gestartet bzw. gestoppt. Der Zählerstand entspricht dann dem zeitlichen Abstand der beiden Datenpakete und bildet einen variablen Divisor für die nachfolgende lineare Interpolationsberechnung im Schnittstellenbaustein. Vorteil ist, dass die Schwankung in der Aktutalisierungszeit für jedes Datenpaket ermittelt werden können und in die Berechnung einfließen. Unstetigkeiten innerhalb der Datenhöhe, die durch einen festen Divisor verursacht werden können, werden somit ausgeschlossen.

### Zeichnung

Ausführungsbeispiele der Erfindung werden in der Zeichnung dargestellt und in der nachfolgenden Beschreibung näher erläutert.

Es zeigen Figur 1 ein Blockschaltbild des erfmdungsgemäßen Steuergeräts, Figur 2 ein erstes Signalzeitdiagramm, Figur 3 ein zweites Signalzeitdiagramm mit Interpolation, Figur 4 ein erstes Flussdiagramm, Figur 5 ein drittes Signalzeitdiagramm, Figur 6 ein viertes Signalzeitdiagramm mit Interpolation und Figur 7 ein zweites Flussdiagramm.

### Beschreibung

Heutige Airbagsteuergeräte können die für die Aktivierung der notwendigen Personenschutzmittel im Fahrzeug erforderlichen Beschleunigungsinformationen nicht nur allein über zentrale im Steuergerät eingebaute Sensoren erfassen, sondern auch über extern angeschlossene Sensoren, wie es Seitenaufprallsensoren oder so genannte Upfrontsensoren sind, die beispielsweise im Bereich des Kühlergrills angeordnet sind. Diese externen Sensoren übertragen ihre auslöserelevanten Daten über eine Schnittstelle asynchron an das Steuergerät. Der serielle Datenstrom muss in einem Schnittstellenbaustein vorgeprüft und in das im Steuergerät eingesetzte synchronarbeitende Kommunikationsprotokoll SPI (Serial Peripherial Interface) umgewandelt werden.

Die externen Sensordaten werden in einem vom Sensor erzeugten festen Zeitraster an den Schnittstellenbaustein im Steuergerät gesendet. Dieses Zeitraster beträgt beispielsweise für den externen Beschleunigungssensor 228 Mikrosekunden. Da die interne Auswerteeinheit im Steuergerät, also der Mikrocontroller die Beschleunigungsinformationen alle 500 Mikrosekunden aus dem Schnittstellenbaustein abholt, ergibt sich zwangsläufig eine Verschiebung zu der Aktualisierungszeit der externen Sensoren. Die Aktualisierungszeit ist also die Zeit, in der die Sensordaten erneuert werden, also alle 228 Mikrosekunden. Um aber dennoch die Daten synchron dem Steuergerät zur Verfügung zu stellen, besitzt der Schnittstellenbaustein erfindungsgemäß eine Recheneinheit, um zwischen zwei gesendeten Beschleunigungsdaten linear zu interpolieren. Die interpolierten Werte werden mit einer Aktualisierungszeit von 1 Mikrosekunde der Recheneinheit zur Verfügung gestellt, die die Daten dann in ihrem eigenen Zeitraster einliest. Somit ist gewährleistet, dass der Mikrocontroller im Steuergerät immer ein aktuelles Beschleunigungsdatum erhält, obwohl nur alle 228 Mikrosekunden reale Sensordaten an das Steuergerät geliefert werden.

Die externen Sensoren besitzen einen eigenen Oszillator, der für die Takterzeugung eines Sensorsteuerschaltkreises verantwortlich ist. Dieser Takt bildet auch die Basis für die Aktualisierungszeit der Sensordaten. Die Takterzeugung ist jedoch nur mit einer endlichen Genauigkeit möglich. Dies führt dazu, dass die Aktualisierungszeit bei den derzeit eingesetzten externen Sensoren beispielsweise eine Toleranz von plus minus 6% aufweist. Entsprechend schwankt die Zeit zwischen den einzelnen Datenpaketen.

Für die lineare Interpolation wird zuerst die Differenz zwischen zwei Beschleunigungswerten gebildet. Diese Differenz bildet den Dividenden für die lineare Interpolation. Der Divisor ist in einer ersten Ausprägung der Erfindung im Schnittstellenbaustein fest eingestellt, und beträgt beispielsweise 228. Dieser Wert ergibt sich durch das verwendete Divisionsverfahren. Es erfolgt keine Division im herkömmlichen mathematischen Sinne, sondern mehrere Schiebeoperationen mit anschließender Addition. Schiebeoperationen haben innerhalb der Digitaltechnik den Vorteil, dass sie sehr einfach innerhalb eines ASIC-Logikteils implementiert werden können.

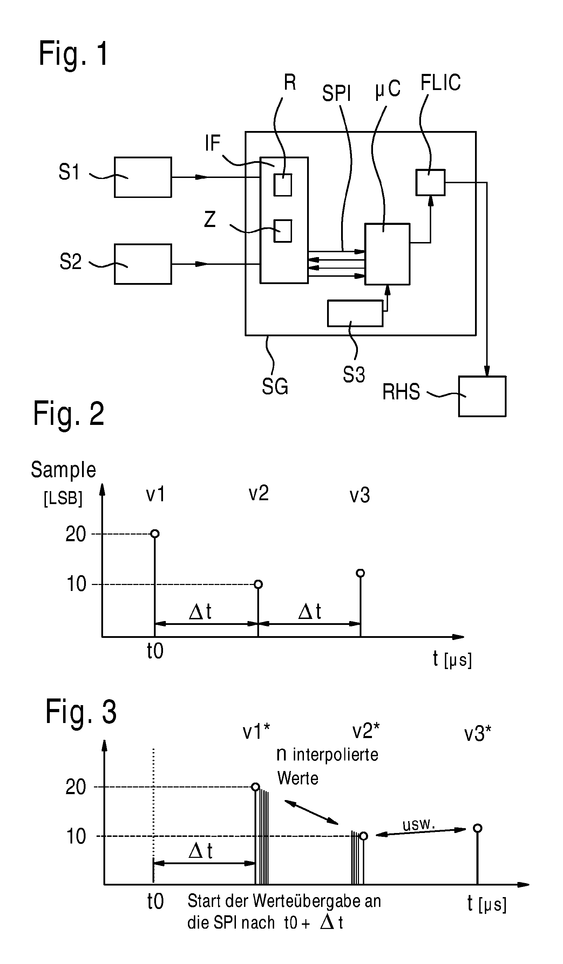

Figur 1 zeigt in einem Blockschaltbild das erfindungsgemäße Steuergerät. Das Steuergerät SG weist einen Schnittstellenbaustein IF auf, der eine Recheneinheit R und einen Zähler Z aufweist. Der Schnittstellenbaustein IF ist über einen ersten Dateneingang mit einem Sensor S 1 verbunden, der sich außerhalb des Steuergeräts SG befindet. An einen zweiten Dateneingang des Schnittstellenbausteins IF ist ein weiterer außerhalb des Steuergeräts SG befindlicher Sensor S2 angeordnet. Der Schnittstellenbaustein IF ist über eine SPI-Leitungsverbindung mit einem Mikrocontroller µC verbunden, an dessen ersten Dateneingang ein im Steuergerät befindlicher Sensor S3 angeschlossen ist. Der Mikrocontroller µC ist über einen Datenausgang mit einem Zündschaltkreis FLIC verbunden, der über einen Ausgang mit Rückhaltemitteln RHS verbunden ist, die sich außerhalb des Steuergeräts SG befinden.

Die Sensoren S1 und S2 übertragen undirektional ihre Sensordaten in Datenpaketen an den Schnittstellenbaustein IF. Die Sensoren S 1 und S2 erhalten hier ihre Energie über die Leitungen, die sie mit dem Schnittstellenbaustein IF verbinden. Sobald die Sensoren S1 und S2 ihre Energie erhalten, beginnen sie mit der Übertragung der Sensordaten. Eine Alternative zu dieser unidirektionalen Sensorübertragung ist eine bidirektionale Übertragung, die sich insbesondere bei einer Bus-Übertragung eignet. Die Sensoren S1 und S2, die vorliegend elektronische Beschleunigungssensoren sind, können auch in einem sogenannten Quasi-Bus seriell angeordnet sein, wobei dann die Sensoren abwechselnd ihre Sensordaten zum Schnittstellenbaustein IF übertragen. Die Übertragung ist asynchron ausgebildet, d. h. die Sensordaten des Sensors S1 und die Sensordaten des Sensors S2 werden nicht im gleichen Takt zum Schnittstellenbaustein IF übertragen, obwohl dies möglich ist, aber die Oszillatoren in den Sensoren S1 und S2 weisen meist eine solche Ungenauigkeit auf, dass selbst bei einer versuchten Synchronisierung dies nicht möglich ist.

Da, wie vorliegend geschildert, die Datenpakete, die von den Sensoren S1 und S2 zum Schnittstellenbaustein IF mit schwankenden Zeitabständen übertragen werden und die Datenübertragungsrate vom Schnittstellenbaustein zum Mikrocontroller µC über die SPI-Leitung mit einer geringeren Übertragungsrate durchgeführt wird als die Übertragung der Sensordaten zum Schnittstellenbaustein wird vorliegend eine Interpolation vorgenommenen, um den Mikrocontroller µC aktualisierte Werte zu übertragen. Der Mikrocontroller µC steuert dann den Zündschaltkreis FLIC in Abhängigkeit von den Daten der Sensoren S1 und S2 und auch des Sensors S3 an, so dass in einem Auslösefall die Rückhaltemittel RHS wie Airbags, Gurtstraffer, insbesondere auch reversible Gurtstraffer, dann elektromotorisch oder pyrotechnisch angesteuert werden, um die Fahrzeuginsassen zu schützen. Auch ein Schutz von Personen außerhalb des Fahrzeugs ist möglich, wenn die vorliegende Konfiguration, insbesondere die mit den externen Sensoren S1 und S2 ohne den Sensor S3 als Fußgängerschutzsensorik verwendet wird. Weitere Komponenten, die in einem Steuergerät üblich sind, wie beispielsweise ein Sicherheitsschalter, sind hier der Einfachheit halber weggelassen worden, da sie für das Verständnis der Erfindung nicht wesentlich sind.

Figur 2 zeigt ein erstes Signalzeitdiagramm. Dabei sind drei Signale v1, v2 und v3 mit unterschiedlichen Amplituden dargestellt. Die Zeitabstände Δt sind hier zwischen dem Signal v1 und v2 und dem Signal v2 und v3 gleich. Um auch für die Zwischenwerte zu sorgen zwischen v1 und v2 in zeitlicher Hinsicht und v2 und v3 wird eine lineare Interpolation vorgesehen. Dies ist in einem zweiten Signalzeitdiagramm in Figur 3 angegeben. Zwischen v1 und v2 werden n-interpolierte Werte ausgegeben zwischen v2 und v3 dann entsprechend. Dabei wird dann pro Mikrosekunde zwischen v1 und v2 ein interpolierter Wert ausgegeben, wobei sich die Steigung der Gerade aus dem Quotienten der Differenz der beiden Signale v1 und v2 dividiert durch Δt ergibt.

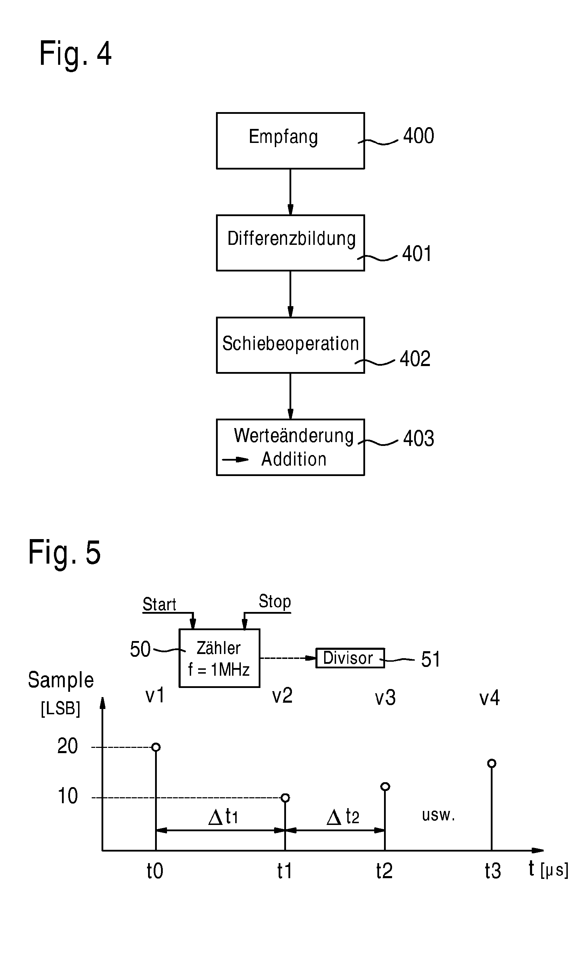

Dies ist im Flussdiagramm in Figur 4 dargestellt. In Verfahrensschritt 400 werden die Signale empfangen, in Verfahrensschritt 401 wird dann eine Differenz zwischen v1 und v2 gebildet. In Verfahrensschritt 402 werden dann anstatt einer echten Division sogenannte Schiebeoperationen durchgefiihrt, um die interpolierten Werte zu bestimmen. In Verfahrensschritt 403 erfolgt dann die Addition der Wertänderungen. D. h. die Werte v1 und v2 müssen bereits vorliegen, um die interpolierten Werte zwischen diesen beiden Werten auszugeben. Dies kann dann im Steuergerät SG übertragen werden. Die Zeit steht ja hier zur Verfügung, da keine Echtzeitübertragung notwendig ist und der Takt zwischen Schnittstellenbaustein IF und dem Mikrocontroller µC erheblich langsamer ist als der Takt, mit dem die Sensordaten zum Schnittstellenbaustein IF übertragen werden. Dem auslöserelevanten Algorithmus im Steuergerät ist das Alter des Datenpakets bekannt. Es beträgt immer konstant 228µs mit einer Toleranz. Dies entspricht der Aktualisierungszeit der externen Sensoren.

Figur 5 zeigt ein weiteres Signalzeitdiagramm. Nunmehr sind Signal v1, v2, v3 und v4 dargestellt, die mit unterschiedlichen Zeitabständen beim Schnittstellenbaustein IF ankommen. Daher wird nun wie oberhalb des Diagramms dargestellt, ein Zähler 50 gestartet, aus dem sich dann der Divisor 51 ergibt. Der Zähler wird gestartet, wenn das erste Datenpaket v1 vollständig beim Interface-Baustein IF angekommen ist. Dies ergibt sich beispielsweise durch die letzten Bits des Datenpakets, also üblicherweise eine Fehlerkorrektur. Der Zähler wird gestoppt, wenn das Ende des zweiten Datenpakets v2 bei Interface-Baustein IF angekommen ist. Dann hat man den zeitlichen Abstand zwischen v1 und v2 und damit auch den Divisor, so dass eine Adaption des Interpolationsverfahrens auf den zeitlichen Abstand vorliegt.

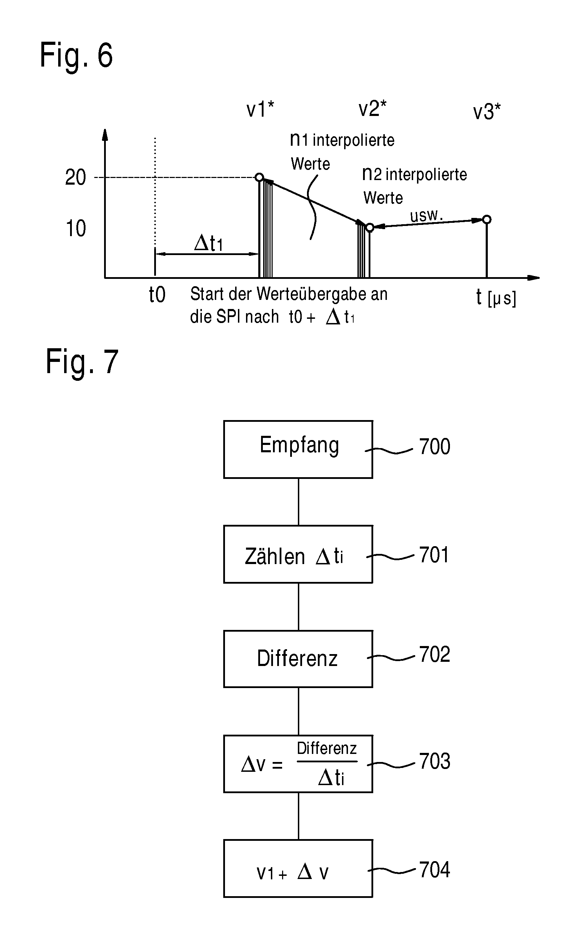

Figur 6 zeigt in einem weiteren Signalzeitdiagramm, wie dies abläuft. Zum Zeitpunkt t0 wird der Zähler gestartet, um dann nach Δt1 beendet zu werden. Damit kann dann die Interpolation berechnet werden. Zwischen v1 und v2 werden dann n1-interpolierte Werte vorliegen und zwischen v2 und v3 n2-interpolierte Werte je nach dem zeitlichen Abstand, der zwischen diesen Datenpaketen vorlag.

Dies verdeutlicht auch das Flussdiagramm in Figur 7. In Verfahrensschritt 700 werden die Datenpakete empfangen. In Verfahrensschritt 701 wird die Zeit gezählt, die zwischen dem Empfang der Datenpakete vergeht. In Verfahrensschritt 702 wird eine Differenz zwischen den Signalamplituden gebildet als Dividend. In Verfahrensschritt 703 wird dann die Differenz gebildet um Δv zu bestimmen. Die Interpolation ergibt sich in Verfahrensschritt 704 dann durch den Haltepunkt v1 als erste Signalamplitude plus die Steigung Δv multipliziert mit der Zeit, um die vollständige Geradengleichung anzugeben.

## Patentansprüche

1. Steuergerät (SG) mit einem Schnittstellenbaustein (IF), an dem wenigstens ein außerhalb des Steuergeräts im Fahrzeug angeordneter Sensor (S1, S2) anschließbar ist, wobei der Schnittstellenbaustein (IF) derart konfiguriert ist, dass der Schnittstellenbaustein (IF) ein Signal von dem wenigstens einen Sensor (S1, S2) in einem ersten Takt empfängt und ein Datentelegramm in einem zweiten Takt an einen Prozessor (µC) im Steuergerät (SG) überträgt, wobei der Schnittstellenbaustein (IF) eine Recheneinheit (R) zur Interpolation des Signals aufweist und der Schnittstellenbaustein (IF) im Datentelegramm das interpolierte Signal überträgt.

2. Steuergerät nach Anspruch 1, **dadurch gekennzeichnet, dass** die Recheneinheit (R) die Interpolation linear durchführt.

3. Steuergerät nach Anspruch 2, **dadurch gekennzeichnet, dass** die Recheneinheit (R) derart konfiguriert ist, dass die Recheneinheit (R) die lineare Interpolation in Abhängigkeit von dem Signal in zwei aufeinderfolgenden Zeitabschnitten im ersten Takt und von einem weiteren Wert durchführt.

4. Steuergerät nach Anspruch 3, **dadurch gekennzeichnet, dass** der weitere Wert voreingestellt ist.

5. Steuergerät nach Anspruch 3, **dadurch gekennzeichnet, dass** der Schnittstellenbaustein (IF) einen Zähler (Z) aufweist, der eine Zeitdifferenz (Δt) zwischen den aufeinander folgenden Zeitabschnitten bestimmt, wobei die Zeitdifferenz (Δt) der weitere Wert ist.

6. Steuergerät nach Anspruch 5, **dadurch gekennzeichnet, dass** der Schnittstellenbaustein (IF) den Zähler (Z) startet, wenn das Signal in einem ersten Datenpaket in einem ersten Zeitabschnitt empfangen wurde und den Zähler (Z) stoppt, wenn das Signal in einem zweiten Datenpaket in einem darauffolgenden zweiten Zeitabschnitt empfangen wurde.
